Europäisches Patentamt

European Patent Office

Office européen des brevets

(19)

(11) Veröffentlichungsnummer : **0 190 425**
**B1**

(12) **EUROPÄISCHE PATENTSCHRIFT**

(45) Veröffentlichungstag der Patentschrift :
**19.07.89**

(21) Anmeldenummer : **85115235.5**

(22) Anmeldetag : **30.11.85**

(51) Int. Cl.⁴ : **B 01 D 39/16**, B 01 D 17/022

(54) **Filter zur Abtrennung von Substanzen mit lipophilen und/oder oleophilen und/oder unpolaren Eigenschaften aus andersartigen Flüssigkeiten, Gasen und Dämpfen.**

(30) Priorität : 08.01.85 DE 3500368

(43) Veröffentlichungstag der Anmeldung :
**13.08.86 Patentblatt 86/33**

(45) Bekanntmachung des Hinweises auf die Patenterteilung : **19.07.89 Patentblatt 89/29**

(84) Benannte Vertragsstaaten :
**AT BE CH DE FR GB IT LI LU NL SE**

(56) Entgegenhaltungen :
**EP--A-- 0 030 569**
**EP--A-- 0 084 711**
**DE--A-- 1 786 089**
**DE--A-- 2 750 838**
**DE--A-- 2 755 837**
**PATENT ABSTRACTS OF JAPAN, Band 9, Nr. 271 (C-311)[1994], 29. Oktober 1985; & JP - A - 60 122 020 (YASUO ITAYA) 29.06.1985**

(73) Patentinhaber : **RHODIA AG**
**Engesserstrasse 8 Postfach 1320**
**D-7800 Freiburg (DE)**

(72) Erfinder : **Maurer, Günter**
**Burgunderstrasse 8**
**D-7844 Neuenburg 4 (DE)**

**Beschreibung**

Die Erfindung betrifft ein Filter zur Abtrennung von Substanzen mit lipophilen und/oder oleophilen und/oder unpolaren Eigenschaften aus andersartigen Flüssigkeiten, Gasen und Dämpfen, mit Polyolefin-Spinnfasern und/oder -Filamenten als Filtermaterial, wobei die Spinnfasern und Filamente einen Durchmesser von 0,1 bis 10 μm aufweisen.

Aus dem Aufsatz « Development and Commercialization Of the Melt Blowing Process For Manufacture of Fine Fibered Webs » in « Formed Fabrics Industrie », Dezember 1974, Seiten 39 bis 50, ist der Einsatz von — durch Spritzspinnen (Blasspinnen) erzeugten — Vliesen aus Polyolefin-Spinnfasern und/oder -Filamenten mit einem Spinnfaser- und Filament-Durchmesser von weniger als 10 μm für Filtrationszwecke, z. B. zum Abfiltrieren von Ölen, bekannt.

Filter mit solchen Vliesen, aber auch Watten und papierartigen Flächengebilden aus den zuvor beschriebenen feinen Polyolefin-Spinnfasern und/oder -Filamenten als Filtermaterialien zeigen jedoch bei ihrer Anwendung als Filter zur Abtrennung von z. B. Ölen oder Fetten aus beispielsweise Wasser oder Luft folgende Nachteile :

— Je nach Feinheit, also Durchmesser, der Spinnfasern und Filamente und Dichte der Vliese, Watten etc. können sie nur unter zusätzlichem Druck zum statischen Druck durchflossen bzw. durchströmt werden.

— Sie verstopfen sehr rasch bzw. setzen sich schon nach relativ kurzer Zeit zu, d. h., daß die Standzeiten solcher Filter sehr kurz sind.

Der Erfindung liegt die Aufgabe zugrunde, ein Filter zur Abtrennung von Fetten, Ölen, Kohlenwasserstoffen, substituierten Kohlenwasserstoffen und dergleichen, also lipophilen und/oder oleophilen und/oder unpolaren Substanzen, aus andersartigen Flüssigkeiten, wie Wasser, andersartigen Gasen, wie (feuchte) Luft, und andersartigen Dämpfen, wie Wasserdampf, zur Verfügung zu stellen,

— das ohne Anwendung von zusätzlichem Druck von den genannten Flüssigkeiten, Gasen oder Dämpfen durchströmt werden kann,

— das gegenüber den bekannten Filtern erheblich längere Standzeiten aufweist.

Diese Aufgabe wird bei einem Filter der eingangs genannten Art zur Abtrennung von Substanzen mit lipophilen und/oder oleophilen und/oder unpolaren Eigenschaften aus andersartigen Flüssigkeiten, Gasen und Dämpfen durch die im Kennzeichen des Anspruchs 1 angegebenen Merkmale gelöst.

Vorteilhafte Ausführungsformen des erfindungsgemäßen Filters sind in den Ansprüchen 2, 3 und 4 angegeben.

Der Vorteil der mit Anspruch 2 beanspruchten Maßnahme liegt darin, daß mit ihr die wirksame Filteroberfläche erhöht wird.

Der Vorteil der mit Anspruch 3 beanspruchten Maßnahme ist der, daß Polyäthylen und Polypropylen von den Polyolefinen am leichtesten zugänglich und relativ preiswert sind. Zudem sind Polyäthylen und Polypropylen bestens geeignet, durch Spritzspinnen zu aus Feinstfasern und/oder -Filamenten aufgebauten Vliesen verarbeitet zu werden.

Der Vorteil der mit Anspruch 4 beanspruchten Maßnahme liegt darin, daß es durch den Zusatz von Substanzen mit adsorbierenden und/oder absorbierenden Eigenschaften, z. B. Aktivkohle-Pulver, möglich wird, nicht nur Substanzen mit lipophilen und/oder oleophilen und/oder unpolaren Eigenschaften aus den andersartigen Flüssigkeiten, Gasen und Dämpfen abzutrennen, sondern darüber hinaus auch andere Substanzen, z. B. solche mit polaren Eigenschaften.

Für die Zwecke der Erfindung eignen sich als Bändchen oder Strängchen (als Filtermaterial) solche mit jeglicher Art von Querschnitt ; sie können also beispielsweise einen runden, ovalen, rechteckigen, quadratischen oder dreieckigen Querschnitt aufweisen, jedoch sind auch andere Querschnittsformen möglich.

Die Bändchen oder Strängchen können endlicher Länge sein und so beispielsweise in Längen von 5 bis 15 cm vorliegen ; sie können jedoch auch in endloser Form vorliegen.

Außerdem können die Bändchen oder Strängchen über ihre Länge strukturiert, z. B. geprägt, und/oder um ihre Längsachse gedreht sein.

Schließlich können die Bändchen oder Strängchen mehr oder weniger komprimiert sein und damit verschiedene Dichten aufweisen.

Substanzen mit lipophilen und/oder oleophilen und/oder unpolaren Eigenschaften sind z. B. Fette, Öle, wie Mineralöle oder Silikonöle, Kohlenwasserstoffe, substituierte Kohlenwasserstoffe, wie chlorierte oder fluorierte Kohlenwasserstoffe, und dergleichen oder deren Gemische.

Bei den andersartigen Flüssigkeiten, Gasen und Dämpfen kann es sich auch um Flüssigkeits-, Gas- und Dampfgemische handeln.

Für die Zwecke der Erfindung eignen sich als Substanzen mit adsorbierenden und/oder absorbierenden Eigenschaften gemäß Anspruch 4 solche wie Aktivkohle, vorzugsweise in Pulverform, Kieselsäuregele, natürliche und künstliche Silikate, Ionenaustauscher, Komplexbildner, Molekularsiebe, ferner Metalloxide, -oxidhydrate und -hydroxide, beispielsweise von Aluminium, Eisen, Calcium, Magnesium, Silicium und Titan, und dergleichen.

Das erfindungsgemäße Filter arbeitet in erster Linie nach dem Durchströmprinzip. Durch die freien Öffnungen und Kanäle zwischen den Bändchen oder Strängchen können die andersartigen Flüssigkeiten, wie Wasser, Gase, wie Luft, und Dämpfe, wie Wasserdampf, relativ leicht passieren, werden dort dennoch verwirbelt, was die Abtrennung der Substanzen mit lipophilen und/oder oleophilen und/oder unpolaren Eigenschaften durch die Bändchen oder Strängchen aus den Polyolefin-Spinnfasern und/oder -Filamenten, die durch ihren molekularen Aufbau solche Substanzen ähnlicher Struktur ausgezeichnet zu binden vermögen, noch begünstigt.

Die Aufnahmekapazität des erfindungsgemäßen Filters für die Substanzen mit lipophilen und/oder oleophilen und/oder unpolaren Eigenschaften kann beeinflusst werden durch

— die Feinheit, also den Durchmesser, der Polyolefin-Spinnfasern und -Filamente

— die Packungsdichte der Bändchen oder Strängchen innerhalb des Filters

— die räumliche Anordnung der Bändchen oder Strängchen innerhalb des Filters

— die Querschnittsfläche der Bändchen oder Strängchen

— die Dichte der Bändchen oder Strängchen selbst.

Die Erfindung wird nachstehend anhand eines Beispiels näher erläutert :

Beispiel

Polypropylen mit einem Schmelzindex bei 230 °C/2,16 kg von 13 g/10 min, einer Dichte bei 23 °C von 0,902 g/cm³ und einem Schmelzbereich von 165-170 °C wurde geschmolzen und mit Hilfe eines Spinnkopfs ähnlich dem gemäß der deutschen Patentschrift 25 40 463 zu Spinnfasern und Filamenten, die einen mittleren Durchmesser von 1,0 μm und eine spezifische Oberfläche von 4,4 m²/g aufwiesen, versponnen (blasgesponnen).

Die Spinnfasern und Filamente wurden durch Ablage auf einer rotierenden Trommel zu einem Spinnvlies umgeformt.

Das erhaltene Vlies hatte ein Flächengewicht von 220 g/m², eine Dicke von 3 mm und eine Breite von 30 cm.

In dieser Form ist das Material für Filtrationszwecke nur bedingt tauglich.

Dieses Vlies wurde mit Hilfe eines Schneidwerks aus plangeschliffenen Rundmessern zu Bändchen mit rechteckigem Querschnitt und einer Breite von 2,5 mm zerschnitten, wobei die durch die auf zwei gegenüberliegenden Wellen versetzt angeordneten Rundmesser gebildeten Spalte für die Formgebung sorgten. Während des Schneidvorgangs wurden die Bändchen bis auf eine mittlere Dicke von 1,5 mm komprimiert. Durch Changierung (Hinundherbewegung) der Vliesbahn wurden Bändchen mit einer Länge von ca. 15 cm erhalten. Diese dem Schneidwerk entnommenen Bändchen wurden in ein zylindrisches Plexiglas-Rohr mit einem Innendurchmesser von 200 mm und einer Länge von 150 cm zwischen zwei Blechsieben mit wabenförmigen Löchern und einer offenen Fläche (freie Durchgangsfläche) von 70 % eingetragen und durch Aufeinanderzubewegen der Blechsiebe auf eine Packungsdichte von 43,4 kg/m³ verdichtet. Die Bändchen waren innerhalb des Plexiglas-Rohres wirr angeordnet, so daß zwischen ihnen freie Öffnungen und Kanäle bestanden.

Durch das so entstandene Filter wurde Wasser geleitet, und zwar bei einem — statischen — Vordruck von 0,6 bar (= 60 000 Pa), wobei ein Durchfluß pro m² Anströmfläche von 10 500 l Wasser/h erreicht wurde. Anschließend wurde diesem Wasser Mineralöl SAE 30 zudosiert, und zwar im Verhältnis Wasser zu Öl von 100 : 1. Das Öl enthaltende Wasser durchströmte das Filter bis zu dessen Sättigung mit Öl ohne Druckerhöhung, wobei das Öl von den Bändchen des Filters bis zum 7,3-fachen des Eigengewichts dieser Bändchen aufgenommen und damit vom Wasser abgetrennt wurde.

Die Erfindung weist folgende Vorteile auf :

Das erfindungsgemäße Filter kann ohne Anwendung von zusätzlichem Druck zum statischen Druck von lipophile und/oder oleophile und/oder unpolare Substanzen enthaltenden Flüssigkeiten, Gasen und Dämpfen durchströmt werden.

Das erfindungsgemäße Filter weist erheblich längere Standzeiten auf als die bekannten Filter.

**Patentansprüche**

1. Filter zur Abtrennung von Substanzen mit lipophilen und/oder oleophilen und/oder unpolaren Eigenschaften aus andersartigen Flüssigkeiten, Gasen und Dämpfen, mit Polyolefin-Spinnfasern und/oder -Filamenten als Filtermaterial, wobei die Spinnfasern und Filamente einen Durchmesser von 0,1 bis 10 μm aufweisen, dadurch gekennzeichnet, daß das Filtermaterial in Form von Bändchen oder Strängchen vorliegt, die

— endlicher oder endloser Länge sind,

— aus Vliesen, Watten oder ähnlichen nicht gewebten Flächengebilden aus solchen Spinnfasern und/oder Filamenten gebildet sind und

— zueinander so angeordnet sind, daß zwischen ihnen freie Öffnungen und Kanäle bestehen.

2. Filter nach Anspruch 1, dadurch gekennzeichnet, daß die Spinnfasern und Filamente einen Durchmesser von 0,5 bis 2 μm aufweisen.

3. Filter nach Anspruch 1 oder 2, dadurch gekennzeichnet, daß das Filtermaterial aus Polyäthylen- und/oder Polypropylen-Spinnfasern und/oder -Filamenten besteht.

4. Filter nach Anspruch 1, 2 oder 3, dadurch gekennzeichnet, daß sich auf und/oder in den Bändchen oder Strängchen Substanzen mit adsorbierenden und/oder absorbierenden Eigenschaften befinden.

**Claims**

1. Filter for separating substances having lipophilic and/or oleophilic and/or apolar properties from heterotypical liquids, gases and vapours, incorporating polyolefin fibres and/or filaments as filter material, these fibres and filaments having a diameter of from 0.1 to 10 μm, characterized in that the filter material is present in the form of ribbons or strands which

— are of finite or continuous length,

— are formed from fleeces, waddings or similar non-woven sheetlike structures made of such fibres and/or filaments and

— are arranged in relation to one another in such a way that free openings and channels exist in-between them.

2. Filter according to Claim 1, characterized in that the fibres and filaments have a diameter of from 0.5 to 2 μm.

3. Filter according to Claim 1 or 2, characterized in that the filter material consists of polyethylene and/or polypropylene fibres and/or filaments.

4. Filter according to Claim 1, 2 or 3, characterized in that substances having adsorbent and/or absorbent properties are present or and/or in the ribbons or strands.

**Revendications**

1. Filtre pour séparer des substances ayant des propriétés lipophiles et/ou oléophiles et/ou non polaires de liquides, de gaz et de vapeurs de nature différente, au moyen de fibres filées et/ou filaments de polyoléfine comme matière filtrante, les fibres filées et filaments ayant un diamètre de 0,1 à 10 μm, caractérisé en ce que la matière filtrante se présente sous la forme de bandelettes ou de languettes qui

— sont de longueur finie ou sans fin,

— sont formées de voiles, d'ouates ou de produits plats non tissés analogues faits de fibres filées et/ou filaments de ce genre,

— présentent un agencement mutuel tel qu'il existe entre elles des ouvertures et canaux libres.

2. Filtre suivant la revendication 1, caractérisé en ce que les fibres filées et filaments ont un diamètre de 0,5 à 2 μm.

3. Filtre suivant la revendication 1 ou 2, caractérisé en ce que la matière filtrante consiste en fibres filées et/ou filaments de polyéthylène et/ou de polypropylène.

4. Filtre suivant la revendication 1, 2 ou 3, caractérisé en ce que des substances ayant des propriétés adsorbantes et/ou absorbantes se trouvent sur et/ou dans les bandelettes ou languettes.